# FASCICULE DE BREVET EUROPEEN

(11) **EP 2 646 385 B1**
(45) Date de publication et mention de la délivrance du brevet: **07.11.2018**
(21) Numéro de dépôt: 11799765.0
(22) Date de dépôt: 22.11.2011
(51) Int. Cl.: C03C 17/34

(54) **SUBSTRAT VERRIER ANTI-CORROSION ET ANTI-SALISSURE EN ATMOSPHERE HUMIDE**
KORROSIONS- UND BEWUCHSHEMMENDES GLASSUBSTRAT ZUR VERWENDUNG IN EINER FEUCHTEN UMGEBUNG
ANTICORROSIVE AND ANTIFOULING GLASS SUBSTRATE FOR USE IN A WET ATMOSPHERE

(30) Priorité: 29.11.2010 FR 1059825
(43) Date de publication de la demande: 09.10.2013
(73) Titulaire: Saint-Gobain Glass France, 92400 Courbevoie (FR)
(72) Inventeur: CLABAU, Frédéric, F-75013 Paris (FR); GUILLEMOT, François, F-75019 Paris (FR)
(74) Mandataire: Saint-Gobain Recherche
(86) Numéro de dépôt international: PCT/FR2011/052722
(87) Numéro de publication internationale: WO 2012/072915

(56) Documents cités:
- EP-A1- 1 148 037
- WO-A1-01/32578
- WO-A1-2008/143756

## Description

L'invention a trait aux vitrages utilisés en atmosphère humide, notamment en intérieur de bâtiments, notamment en salle de bains, salle d'eau (cabine de douche, pare-baignoire...).

On connaît, sur les cabines de douche et pare-baignoire, des couches de revêtement organique hydrophobe, tel que de silane à fonction perfluoroalkyle terminale.

Les revêtements hydrophobes ne permettent pas l'écoulement des petites gouttelettes d'eau, notamment en partie haute des cabines de douche ou formées à partir de vapeur d'eau. L'apparition de calcaire ne peut donc être limitée que si l'utilisateur racle le verre après chaque douche.

Ces revêtements étant organiques, ils ne sont ni trempables ni durables, leur durée de vie n'excédant pas au mieux quelques années. L'usure graduelle de la couche induit une difficulté croissante pour les gouttes d'eau à s'écouler (augmentation de l'angle de glissement, du volume de glissement ou de décrochement d'une goutte d'eau), et donc un dépôt de calcaire accru.

D'autre part, les revêtements hydrophobes n'ont quasiment pas d'action contre la corrosion du verre, phénomène reconnu comme très problématique en cas de stockage du verre de longue durée, ou de son utilisation après quelques années. La lixiviation du verre puis sa rugosification induisent des taches blanches qui ne peuvent être enlevées par un produit chimique, au contraire du calcaire.

Le document EP 1 148 037 A1 décrit un substrat verrier destiné à une utilisation en milieu humide revêtu d'une couche de Si₃N₄ puis d'une couche de SiO₂ puis encore d'une autre paire de ces couches. Le première couche de Si₃N₄ a une épaisseur de 20 nm et la dernière couche de SiO₂ a une épaisseur de 90 à 120 nm. Le procédé de dépôt utilisé est la pulvérisation cathodique.

Le document WO 01/32578 A1 décrit le dépôt d'une couche de Si₃N₄ puis de SiO₂ sous forme de gradient, en précisant que la couche de SiO₂ obtenue sur le dessus est fine.

L'invention a donc pour but de limiter l'hydrophobie extrinsèque du verre, et donc l'apparition du calcaire ainsi que la corrosion du verre qui en est l'une des causes. Les inventeurs se sont aperçus que cet effet technique pouvait être obtenu de manière amplifiée par la synergie d'une première couche appropriée barrière vis-à-vis de la migration des alcalins du verre et d'une seconde couche appropriée anti-salissures.

Ce but a donc été atteint par l'invention qui a pour objet un substrat verrier destiné à une utilisation en atmosphère humide, caractérisé en ce qu'il est revêtu d'un empilement comprenant, par ordre d'éloignement croissant au substrat,
- une couche de nitrure ou oxynitrure de silicium d'épaisseur comprise entre 10 et 90 nm, et
- une couche de silice d'épaisseur comprise entre 10 et 65 nm et présentant une surface exposée à l'air ambiant.

Le substrat verrier fait ici référence à du verre sodocalcique ou équivalent.

La couche de nitrure ou oxynitrure de silicium (couche intérieure, inférieure) est une couche transparente barrière aux alcalins. Elle est apte à empêcher le transfert des alcalins du verre dans la couche extérieure ou supérieure de silice à des températures inférieures à 500 °C. La limitation du transfert des alcalins dans la couche de silice lors du recuit ou lors de l'utilisation du verre permet de limiter la corrosion pendant une très longue période.

La couche extérieure ou supérieure de silice permet de limiter le dépôt des salissures organiques présentes dans l'air ambiant, qui rendent les surfaces plus ou moins hydrophobes après quelques jours d'exposition à celui-ci. La limitation du dépôt de salissures organiques s'explique par la diminution de l'ionicité des liaisons d'extrême surface, et donc par la diminution des interactions électrostatiques réalisables avec les éléments extérieurs. En effet, Na-O présent dans le verre est plus ionique que Si-O (valeurs des électronégativités d'Allred-Rochow). La couche extérieure de silice est dopée par Al, B, Zr ou C, ou non dopée.

Selon des caractéristiques préférées du substrat de l'invention :
- la couche de silice recouvre directement la couche de nitrure ou oxynitrure de silicium qui recouvre directement le substrat verrier ; cette structure est la plus simple capable de réaliser la fonction de l'invention : limiter durablement la corrosion du verre, et le dépôt sur celui-ci de salissures et de calcaire, particulièrement en atmosphère humide, au contact de vapeur d'eau et/ou d'eau liquide ;
- l'épaisseur de la couche de nitrure ou oxynitrure de silicium, respectivement de la couche de silice, est au plus égale à 65, de préférence 40 nm ;
- l'épaisseur cumulée de la couche de nitrure ou oxynitrure de silicium et de la couche de silice est au plus égale à 60, de préférence 55 nm ; à condition que l'épaisseur de la couche de nitrure ou oxynitrure de silicium soit au moins égale à 15 nm, une épaisseur cumulée des deux couches de 50 nm est déjà suffisante ;
- ledit nitrure ou oxynitrure de silicium est Si₃N₄.

D'autres objets de l'invention consistent en :
- un procédé de préparation d'un substrat verrier tel que décrit précédemment, caractérisé en ce que l'une au moins des couches de nitrure ou oxynitrure de silicium ou de silice est formée par pulvérisation cathodique, notamment assistée par magnétron ; dans une réalisation particulièrement intéressante, ce procédé comprend une trempe thermique après la formation des couches de nitrure ou oxynitrure de silicium ou de silice, qui résistent avantageusement aux températures élevées alors mises en oeuvre ;
- une utilisation d'un substrat verrier tel que décrit précédemment pour limiter et retarder la corrosion du verre et la formation de salissure (y compris sous forme de calcaire) sur celui-ci en atmosphère humide ; et
- une application de ce substrat verrier à une cabine de douche, un pare-baignoire ou autre élément de salle de bain.

L'invention est maintenant illustrée par l'exemple suivant.

### EXEMPLE

Différentes couches sont déposées sur la face étain d'une feuille de verre sodocalcique flotté.

Les conditions de ces dépôts par pulvérisation cathodique assistée par magnétron sont consignées dans le tableau ci-dessous.

La fréquence cathode est 100 kHz dans tous les cas.

Les quatre premières lignes du tableau sont relatives au dépôt d'une simple couche, les cinquième et sixième au dépôt successif de deux couches en empilement Si₃N₄/SiO₂.

**TABLEAU**

| Matériau déposé | Cible | Puissance de cathode (W) | Pression (µbar) | Ar (sccm) | N₂ (sccm) | O₂ (sccm) | Vitesse de passage (m/min) | Epaisseur (nm) |
|---|---|---|---|---|---|---|---|---|
| Si₃N₄ | Si | 5000 | 1,5 | 10 | 38 | | 0,41 | 50 |
| SiO₂ | Si | 3000 | 2 | 25 | | 28 | 0,14 | 51 |
| SnZnO | SnZn | 2000 | 2,5 | 15 | | 41 | 0,354 | 48 |
| ZrO₂ | Zr | 2000 | 2 | 40 | | 16 | 0,061 | 46 |
| Si₃N₄ | Si | 5000 | 1,5 | 10 | 38 | | 1,465 | 17 |
| SiO₂ | Si | 3000 | 2 | 30 | | 28 | 0,258 | 33 |

Les valeurs indiquées en sccm (de l'anglais « standard cubic centimeter per minute ») sont celles de débits de gaz.

La vitesse de passage est celle du substrat par rapport aux moyens de dépôt.

L'épaisseur est celle du revêtement déposé.

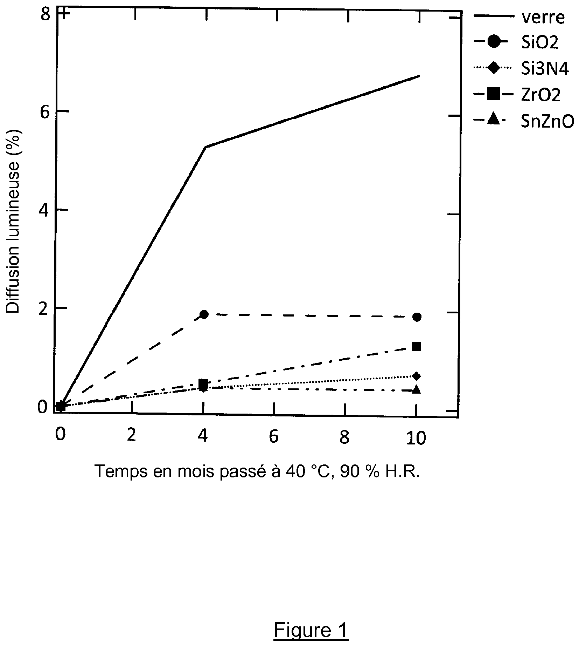

Il est maintenant fait référence à la figure 1 annexée, représentant, pour une feuille de verre nue ou revêtue de différentes couches, la diffusion lumineuse en % en fonction du temps en mois passé à 40 °C et 90% H.R.. Ces courbes expriment la résistance à la corrosion du verre.

Toutes les couches limitent la corrosion du verre, pouvant être classées par effet de limitation croissant comme suit : SiO₂, zrO₂, Si₃N₄, SnZnO.

On prépare un échantillon conforme à l'invention par dépôts successifs des couches de Si₃N₄ puis SiO₂ décrites précédemment.

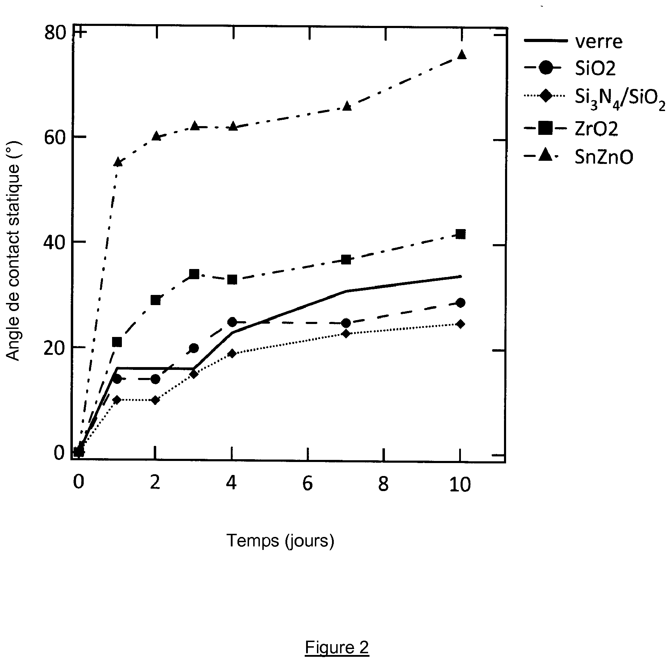

On a représenté à la figure 2 annexée l'angle de contact statique à l'eau en degrés (°) en fonction du temps en jours. La surface a d'autant plus tendance à retenir les salissures et le calcaire, que cet angle est important.

Bien que les couches de SnZnO, respectivement ZrO₂ limitent et retardent la corrosion du verre comme il a été vu précédemment, elles aggravent sa tendance à retenir les salissures.

Seuls la couche de SiO₂ et, dans une mesure plus importante, l'empilement Si₃N₄/SiO₂ selon l'invention, ont un effet anti-salissures.

## Revendications

1. Substrat verrier destiné à une utilisation en atmosphère humide, **caractérisé en ce qu'**il est revêtu d'un empilement comprenant, par ordre d'éloignement croissant au substrat,
- une couche de nitrure ou oxynitrure de silicium d'épaisseur comprise entre 10 et 90 nm, et
- une couche de silice d'épaisseur comprise entre 10 et 65 nm et présentant une surface exposée à l'air ambiant.

2. Substrat selon la revendication 1, **caractérisé en ce que** la couche de silice recouvre directement la couche de nitrure ou oxynitrure de silicium qui recouvre directement le substrat verrier.

3. Substrat selon l'une des revendications précédentes, **caractérisé en ce que** l'épaisseur de la couche de nitrure ou oxynitrure de silicium est au plus égale à 65, de préférence 40 nm.

4. Substrat selon l'une des revendications précédentes, **caractérisé en ce que** l'épaisseur de la couche de silice est au plus égale à 40 nm.

5. Substrat selon l'une des revendications précédentes, **caractérisé en ce que** l'épaisseur cumulée de la couche de nitrure ou oxynitrure de silicium et de la couche de silice est au plus égale à 60, de préférence 55 nm.

6. Substrat selon l'une des revendications précédentes, **caractérisé en ce que** ledit nitrure ou oxynitrure de silicium est Si₃N₄.

7. Procédé de préparation d'un substrat verrier selon l'une des revendications précédentes, **caractérisé en ce que** l'une au moins des couches de nitrure ou oxynitrure de silicium ou de silice est formée par pulvérisation cathodique, notamment assistée par magnétron.

8. Procédé selon la revendication 7, **caractérisé en ce qu'**il comprend une trempe thermique après la formation des couches de nitrure ou oxynitrure de silicium ou de silice.

9. Utilisation d'un substrat verrier selon l'une des revendications 1 à 6 pour limiter et retarder la corrosion du verre et la formation de salissure sur celui-ci en atmosphère humide.

10. Application d'un substrat verrier selon l'une des revendications 1 à 6 à une cabine de douche, un pare-baignoire ou autre élément de salle de bain.

## Patentansprüche

1. Glassubstrat zur Verwendung in einer feuchten Umgebung, **dadurch gekennzeichnet, dass** es mit einem Stapel beschichtet ist, umfassend in der Reihenfolge zunehmender Entfernung zum Substrat
- eine Schicht aus Siliciumnitrid oder Siliciumoxidnitrid mit einer Dicke von 10 bis 90 nm und
- eine Siliciumdioxidschicht mit einer Dicke von 10 bis 65 nm, die eine Oberfläche aufweist, die der Umgebungsluft ausgesetzt ist.

2. Substrat nach Anspruch 1, **dadurch gekennzeichnet, dass** die Siliciumdioxidschicht direkt die Siliciumnitrid- oder Siliciumoxidnitridschicht bedeckt, die direkt das Glassubstrat bedeckt.

3. Substrat nach einem der vorhergehenden Ansprüche, **dadurch gekennzeichnet, dass** die Dicke der Siliciumnitrid- oder Siliciumoxidnitridschicht höchstens gleich 65, vorzugsweise 40 nm, ist.

4. Substrat nach einem der vorhergehenden Ansprüche, **dadurch gekennzeichnet, dass** die Dicke der Siliciumdioxidschicht höchstens gleich 40 nm ist.

5. Substrat nach einem der vorhergehenden Ansprüche, **dadurch gekennzeichnet, dass** die kumulierte Dicke der Siliciumnitrid- oder Siliciumoxidnitridschicht und der Siliciumdioxidschicht höchstens gleich 60, vorzugsweise 55 nm, ist.

6. Substrat nach einem der vorhergehenden Ansprüche, **dadurch gekennzeichnet, dass** das Siliciumnitrid oder Siliciumoxidnitrid Si₃N₄ ist.

7. Verfahren zur Herstellung eines Glassubstrats nach einem der vorhergehenden Ansprüche, **dadurch gekennzeichnet, dass** mindestens eine der Siliciumnitrid- oder Siliciumoxidnitrid- oder der Siliciumdioxidschichten durch Sputtern, insbesondere Magnetronsputtern, gebildet wird.

8. Verfahren nach Anspruch 7, **dadurch gekennzeichnet, dass** es eine thermische Härtung nach der Bildung der Siliciumnitrid- oder Siliciumoxidnitrid- oder der Siliciumdioxidschichten umfasst.

9. Verwendung eines Glassubstrats nach einem der Ansprüche 1 bis 6 zum Begrenzen und Verzögern der Glaskorrosion und der Bildung von Verschmutzungen auf diesem in feuchter Umgebung.

10. Anbringung eines Glassubstrats nach einem der Ansprüche 1 bis 6 an einer Duschkabine, einer Badewannen-Trennwand oder eines anderen Badezimmerelements.

## Claims

1. A glass substrate intended for use in a wet atmosphere, **characterized in that** it is coated with a multilayer comprising, in order of increasing distance from the substrate,
- a layer of silicon nitride or oxynitride having a thickness between 10 and 90 nm, and
- a layer of silica having a thickness between 10 and 65 nm and having a surface exposed to the ambient air.

2. The substrate as claimed in claim 1, **characterized in that** the layer of silica directly covers the layer of silicon nitride or oxynitride which directly covers the glass substrate.

3. The substrate as claimed in either of the preceding claims, **characterized in that** the thickness of the layer of silicon nitride or oxynitride is at most equal to 65 nm, preferably 40 nm.

4. The substrate as claimed in one of the preceding claims, **characterized in that** the thickness of the layer of silica is at most equal to 40 nm.

5. The substrate as claimed in one of the preceding claims, **characterized in that** the combined thickness of the layer of silicon nitride or oxynitride and the layer of silica is at most equal to 60 nm, preferably 55 nm.

6. The substrate as claimed in one of the preceding claims, **characterized in that** said silicon nitride or oxynitride is Si₃N₄.

7. A process for preparing a glass substrate as claimed in one of the preceding claims, **characterized in that** at least one of the layers of silicon nitride or oxynitride or of silica is formed by sputtering, in particular magnetron sputtering.

8. The process as claimed in claim 7, **characterized in that** it comprises thermal tempering after the formation of the layers of silicon nitride or oxynitride or of silica.

9. The use of a glass substrate as claimed in one of claims 1 to 6, for limiting and slowing down the corrosion of the glass and the formation of soiling thereon in a wet atmosphere.

10. The application of a glass substrate as claimed in one of claims 1 to 6 to a shower cubicle, a bath screen or other bathroom component.
